# EUROPEAN PATENT APPLICATION

(11) **EP 2 213 994 A1**
(43) Date of publication of application: **04.08.2010**
(21) Application number: 10163052.3
(22) Date of filing: 11.06.2004
(51) Int. Cl.: G01J 5/08

(54) **Laser system**

(30) Priority: 16.06.2003 US 478935 P; 14.07.2003 US 486951 P
(62) Divisional of application: 04076714.7
(71) Applicant: White Box Inc., Stamford, Connecticut 06907 (US)
(72) Inventor: Hollander, Milton Bernard, Stamford, CT CT Connecticut 06903 (US); Baghai, Shahin, Trumbull, CT 06611 CT 06611 (US)
(74) Representative: Witte, Weller & Partner

(57) **Abstract**

An infra-red measurement device is disclosed having at least two laser emitters (2) which between them define a sighting area (7,7',7"). In one embodiment of the invention, two lasers are provided and these are each preferably split into a number of beams by means of, for example, a diffraction grating lens (4). The fact that there are two laser emitting devices, means that effectively twice the power can be utilised since the limit is per laser emitting device, and thus twice the brightness of a conventional device attained. In another embodiment of the invention, four laser emitters (2) are employed and the beams (6) can be split by a diffraction grating as before. The laser emitters in the device can be operated simultaneously, sequentially, or can be pulsed. Having greater brightness than conventional devices, the detectors of the invention are excellent for use in dark or smoky conditions, for example for obtaining the temperatures of car engines, furnaces and the like.

## Description

This invention concerns a laser system and in particular a laser system suitable for use with an infra-red measurement device.

Infra-red measurement devices, for example, non-contact infra-red temperature measurement devices, comprise an infra-red detector and an optical system to focus the infrared radiation from the object whose temperature is being measured onto the detector. Many of these devices are portable or hand-held and it is therefore important that the operator is able to point the device at exactly the right place so that the correct temperature is being measured. To this end, some such devices are provided with a laser emitter with which the device as a whole can be aimed. The laser beam may appear as a "spot" at the centre of the optical field, or may be split, e. g. by diffraction device, to produce a number of spots to define the measurement area in the optical field.

However, for safety reasons, there is an upper limit on the power of the laser beam which can be employed with such a device. This means that the efficiency of some of the conventional devices, when used in smoky or dark conditions, or at greater distances from the object being measured, is less than satisfactory.

The invention seeks to provide an infra-red measurement device incorporating a laser system improved in the above respects.

According to the present invention, there is provided an infra-red measurement device having a laser emitter for sighting purposes, **characterised in that** there are at least two laser emitters which define a sighting area.

In one embodiment of the invention, two lasers are provided and these are each preferably split into a number of beams by means of, for example, a diffraction grating, diffraction lens, prism, or other beam splitting device. The fact that there are two laser emitting devices, means that effectively twice the power can be utilised since the safety limit is per laser emitting device, and thus twice the brightness of a conventional device attained. Each beam can be split more than once, e.g. sequentially, if desired to produce more complex patterns.

In another embodiment of the invention, four laser emitters are employed and at least some of the beams can be split by diffraction grating as before.

The laser emitters in the device of the present invention can be operated simultaneously, sequentially, or can be pulsed. Having greater brightness than conventional devices, the devices of the invention are excellent for use in dark or smoky conditions, for example for obtaining the temperatures of car engines, furnaces and the like. Moreover, the greater power allows the device to be used at greater distances from the object being measured than hitherto. The devices are preferably hand-held and may conveniently be battery powered.

A preferred example of the best mode of carrying out the invention is a construction array mounted with an infra red detector on a hand held device including a plurality of individual lasers of maximum safe power linked with on-off and/or power control switching wherein, at a first switch position, power supply to the lasers is cut off; in a second switch position, all the lasers are powered on, including an unmodified beam from one or more of the lasers directed to a position at or near the centre of the detector field of view; in a third switch position at least one laser is split by a diffraction element to produce a pattern of light intensity distribution spots on the measurement area surface to indicate to the user the edge of the field of view of the infra red detector together with a central spot from another un-split beam of a different laser.

In a further example, at least three lasers are provided, one defining a central or near central un-split spot, and the others each defining one or more spots each at or near the edges of the detector's field of view.

The invention will be described further, by way of example, with reference to the accompanying drawings, in which:
Figure 1 is a cross-sectional view of an infra-red temperature detector having two laser emitters in accordance with the invention;
Figure 2 is a similar view to Figure 1, wherein the device is configured for close field of view;
Figure 3 comprises diagrammatic representations of the field of view where four laser beams are employed in two configurations; and
Figure 4 is a similar view to Figure 3 showing two further laser field of view configurations.

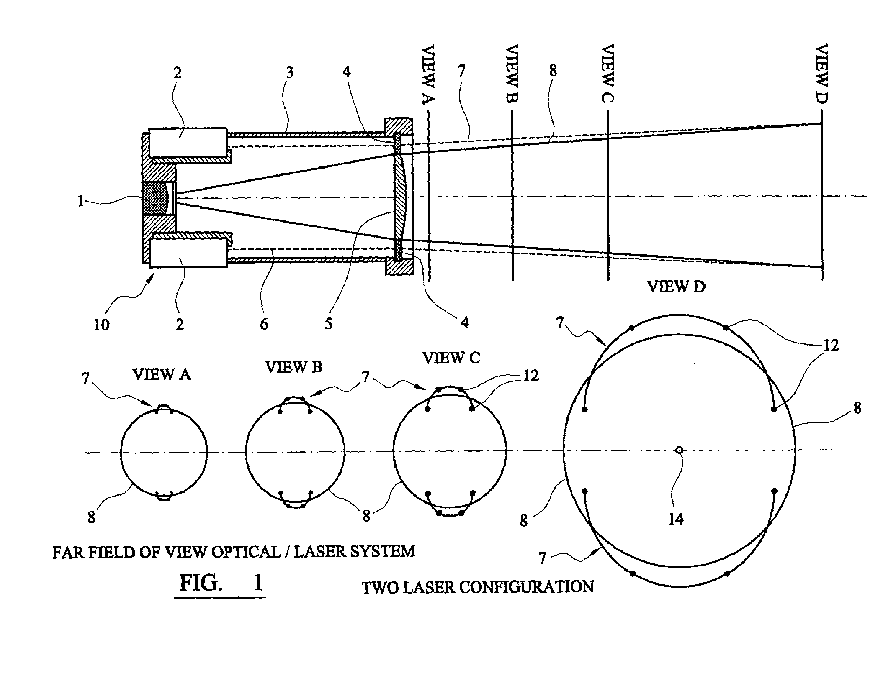

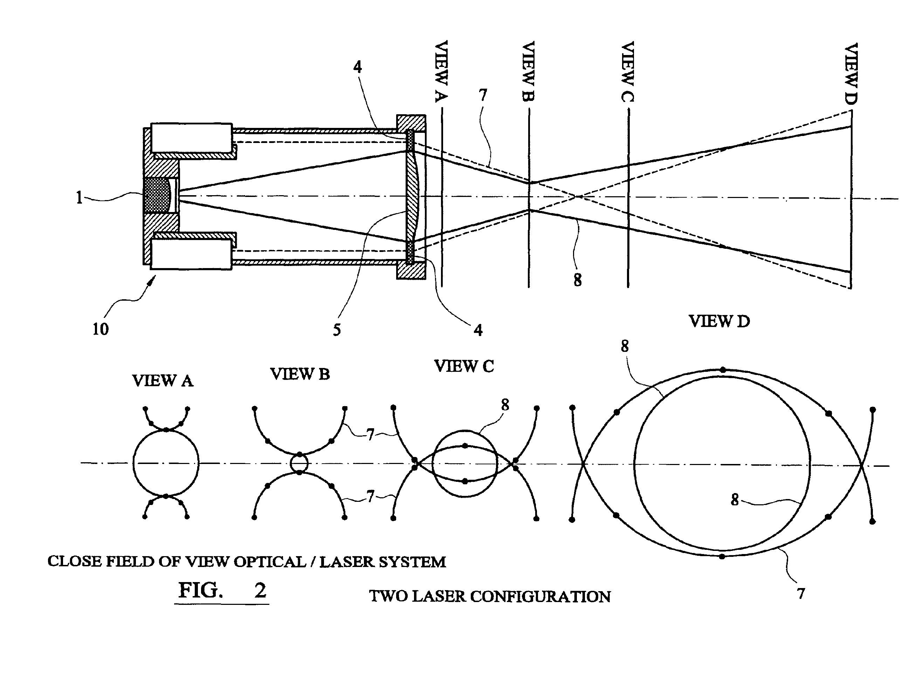

Referring to the drawings, and in particular Figures 1 and 2, Figure 1 illustrates a far field of view optical and laser system for an infra-red heat detection device generally designated (10). The device (10) comprises an infra-red detector (1) on which is focused infrared radiation by means of an optical infra-red lens (5). The lens (5) is held in a lens housing (3) within which are located two laser modules (2) each producing a laser beam (6) which illuminate and pass through diffraction lenses (4).

The diffraction grating lenses (4) split each of the beams (6) into a series of dots (12) which, to the eye, form a laser envelope in the form of a semi-circle (7). The optical field of view of the detector (1) is defined by a field of view envelope (8), and it will be seen that the set up of the diffraction grating lenses is such that the laser envelope (7) matches the optical field of view envelope (8) at essentially all points along the operating range of the system as shown by the various views A, B, C and D. It will be appreciated that the optical envelope (8) is not, in practice, visible to the naked eye, whereas the laser envelopes (7) are.

In Figure 2, the device is set up differently to give a close field of view set up where the lens (5) causes the optical field of view to take the configuration illustrated. In this case, each diffraction grating lens (4) is set up so that the semi-circular laser envelopes (7) are inverted close to the device (10) (views A and B) but progressively move towards the pattern shown in Figure 1 at greater distances (views C and D). In each case, the operator is able to locate the centre of the optical field equidistant between the (visible) laser envelopes (7) and can thus sight the device accurately.

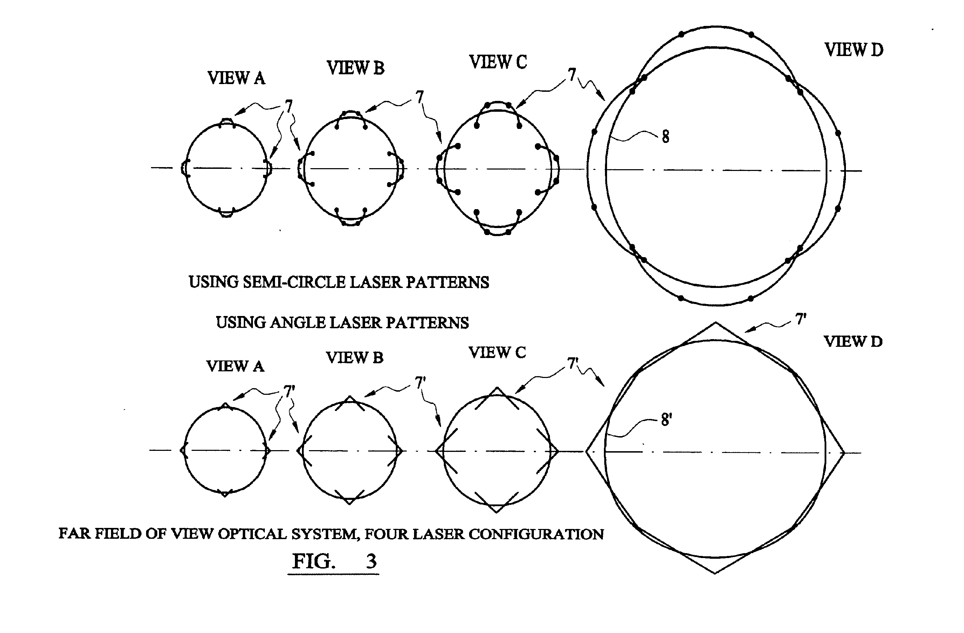

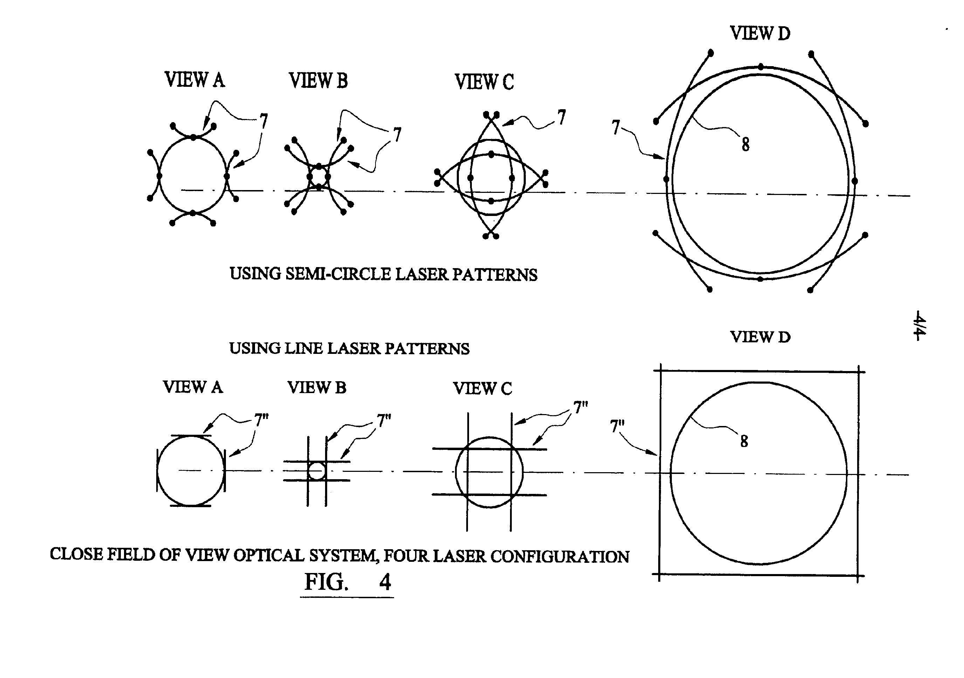

Referring now to Figure 3, the device (10) (not shown) incorporates four laser modules (2) producing four laser beams which are split by the diffraction grating lenses (4) into four semi-circular laser envelopes (7), or by selection of a different diffraction grating or lens, angular laser patterns (7'). The field of view configurations in Figure 3 are in respect of the far field of optical view system. In Figure 4, in contrast, a close field of view optical system is illustrated with four laser beams (6) producing four sets of laser envelopes (7) which can be semi-circular as before, or linear (7") by selecting the correct configuration of diffraction grating lens (4).

In an alternative embodiment, one of the modules (2) may be focussed so as to produce a spot (14) (Figure 1) at or near the centre of the optical field of view (8). If a single (un-split) spot (14) is produced this will be brighter than the split envelopes (7) and will be visible at a substantial distance away.

The use of four laser emitters (2) quadruples the permissible power, and therefore the brightness, of the laser envelope and is especially useful in dark or smoky conditions or at greater distances from the object being measured.

It will be appreciated that configurations other than semi-circles, angles, lines, and the like may be used to identify the optical field of view according to requirements. The detector of the invention provides a simple solution to the problem of brightness of the laser envelope in conditions of poor visibility or at greater distances from the object being measured.

## Claims

1. An infra-red measurement device (10) having a laser emitter (2) for sighting purposes, **characterised in that** there are at least two laser emitters (2) which define a sighting area (7,7',7",14).

2. A device for non-contact temperature measurement, preferably as claimed in claim 1, having a detector (2), onto which electromagnetic radiation emanating from a measuring spot on a test object is projected by an optical imaging system; and a sighting device for identifying the position and/or the size of the measuring spot on the test object, wherein the sighting device comprises separate light sources for generation of sighting beams, and wherein a respective independent light source is provided for generation of each sighting beam.

3. A measuring device for measuring the temperature of a measured spot on a measured object without contacting the measured object, preferably as claimed in claim 1, said measuring device comprising:
a detector;
an optical imaging system for projecting electromagnetic radiation from a measured spot on a measured object onto said detector; and
a sighting device for marking the position and/or the size of the measured spot on the measured object, said sighting device comprising at least two light sources, that each provides a respective sighting ray; and
wherein the optical imaging system is set up to define a focus point of the measured spot from said detector, the focus point being configured with respect to the detector, in a reproducible manner, from a near position to a distant position and from the distant position to a near position;
wherein at least one of said respective sighting rays of the sighting device is dedicated to short range marking and at least one other of said respective sighting rays of the sighting device is dedicated to long range marking; and
wherein said sighting device is selectably configured between short range marking and long range marking upon the focus point being configured from the near position to the distant position.

4. A non-contact infra-red temperature measurement device (10), preferably as claimed in claim 1, having an infra-red detector (1), an optical system to focus infrared radiation from an object energy zone whose temperature is to be measured onto the detector (1), and a laser sighting system including at least two laser emitters (2) for sighting purposes, each of the at least two laser emitters (2) emitting a laser beam (6) for defining a sighting area (7; 7'; 7") of the object energy zone, wherein the optical and laser system can be set up differently to provide either a far field of view or a close field of view, wherein the laser beams (6) from the laser emitters (2) are each focused into visible laser patterns to identify the optical field of view (8) of the infra-red detector (1).

5. The device as claimed in claim 4, wherein the sighting area (7; 7'; 7") matches the optical field of view (8) of the infra-red detector (1).

6. The device as claimed in any of claims 4 or 5, wherein the optical elements (4) direct the laser beams to the center and/or to the edges of the sighting area (7; 7'; 7").

7. The device as claimed in any of claims 4 - 6, wherein the optical and laser system can be set up to provide either a far field of view or a close field of view.

8. The device as claimed in any of claims 4 - 7, wherein the laser beams are formed into patterns in order to identify the optical field of view of the infrared detector (1).

9. The device as claimed in any of claims 4 - 8, wherein the laser emitters (2) are operated sequentially.

10. The device as claimed in any of claims 4 - 9, wherein the device is a hand-held device and a laser array is mounted with the infra-red detector on the hand-held device.

11. The device as claimed in any of claims 4 - 10, wherein the device is a hand-held device having a multiple laser array mounted together with the infra-red detector.

12. The device as claimed in any of claims 1 - 11, wherein the device is battery powered.

13. A device as claimed in claim 1 wherein four lasers (2) are provided.

14. A method of sighting an infra-red detector which comprises providing two or more laser emitters (2) and focussing the resultant laser beams (6) into laser envelopes (7,14) matching the optical field of view.

15. A method as claimed in claim 14 wherein the laser emitters (2) are operated simultaneously, sequentially, or are pulsed.
